# EUROPÄISCHE PATENTSCHRIFT

(11) **EP 4 438 883 B1**
(45) Veröffentlichungstag und Bekanntmachung des Hinweises auf die Patenterteilung: **08.04.2026**
(21) Anmeldenummer: 24157710.5
(22) Anmeldetag: 14.02.2024
(51) Int. Cl.: F02D 41/02, F02D 13/02, F01N 3/22, F01N 3/30, F02D 41/40, F02D 41/14

(54) **VERFAHREN ZUM AUFHEIZEN EINER ABGASNACHBEHANDLUNGSKOMPONENTE IN DER ABGASANLAGE EINES FREMDGEZÜNDETEN VERBRENNUNGSMOTORS**
METHOD FOR HEATING AN EXHAUST GAS AFTER-TREATMENT COMPONENT IN THE EXHAUST GAS SYSTEM OF A SPARK-IGNITED INTERNAL COMBUSTION ENGINE
PROCÉDÉ DE CHAUFFAGE D'UN COMPOSANT DE TRAITEMENT DES GAZ D'ÉCHAPPEMENT DANS LE SYSTÈME D'ÉCHAPPEMENT D'UN MOTEUR À COMBUSTION INTERNE À ALLUMAGE COMMANDÉ

(30) Priorität: 27.03.2023 DE 102023202729
(43) Veröffentlichungstag der Anmeldung: 02.10.2024
(73) Patentinhaber: VOLKSWAGEN AG, 38440 Wolfsburg (DE)
(72) Erfinder: Gessenhardt, Christopher, 39356 Weferlingen (DE)

(56) Entgegenhaltungen:
- DE-A1- 102019 113 738
- DE-A1- 102019 204 091
- DE-B4- 10 351 375
- JP-A- 2016 011 589
- US-A1- 2014 014 066

## Beschreibung

Die Erfindung betrifft ein Verfahren zum Aufheizen einer Abgasnachbehandlungskomponente in der Abgasanlage eines fremdgezündeten Verbrennungsmotors sowie ein Steuergerät und einen Verbrennungsmotor zur Durchführung eines solchen Verfahrens gemäß dem Oberbegriff der unabhängigen Patentansprüche.

Im Hinblick auf eine weitere Verschärfung der Abgasnormen, beispielsweise mit Einführung der EU7-Norm, ist es erforderlich, insbesondere die Kaltstartemissionen, welche einen Großteil der gesamten Emissionen ausmachen, signifikant zu verringern. Im Kaltstartbetrieb, also unmittelbar nach Start des Verbrennungsmotors, sind die Abgasnachbehandlungskomponenten in der Regel noch nicht hinreichend aufgewärmt, um eine Konvertierung der bei der Verbrennung des Kraftstoffs entstehenden Rohemissionen zu ermöglichen. Dies führt insbesondere zu in der Kaltstartphase erhöhten Abgasemissionen, die selbst bei einer vollständigen Konvertierung der Rohemissionen nach der Kaltstartphase dazu führen, dass die Grenzwerte für während eines Testzyklus aufsummierten Emissionen nicht mehr eingehalten werden. Um dies zu vermeiden, wären bei aus dem Stand der Technik bekannten Verbrennungsmotoren mit Abgasnachbehandlungssystemen gegebenenfalls Kundenrestriktionen wie ein Abfahrverbot oder eine Einschränkung der Leistung unmittelbar nach dem Start des Verbrennungsmotors notwendig, um eine Einhaltung der EU7-Emissionsgrenzwerte unter allen geforderten Randbedingungen sicherzustellen.

Zur Erfüllung der EU7-Abgasnorm bei Ottomotoren haben sich Abgasnachbehandlungssysteme verbreitet, welche einen oder mehrere Drei-Wege-Katalysatoren sowie einen Partikelfilter umfassen. Ein Drei-Wege-Katalysator ist ein Fahrzeugkatalysator für die Abgasnachbehandlung von Verbrennungsmotoren, bei der Kohlenstoffmonoxid (CO), Stickoxide (NO_{X}) und unverbrannte Kohlenwasserstoffe (HC) zu Kohlenstoffdioxid (CO₂), molekularem Stickstoff (N₂) und Wasserdampf (H₂O) umgewandelt werden. Aus der gleichzeitigen Umwandlung dieser drei Luftschadstoffe leitet sich der Name des Katalysators ab. Zum Aufheizen der Abgasnachbehandlungskomponenten des Verbrennungsmotors sind innermotorische Heizmaßnahmen bekannt, welche ein Verstellen des Zündwinkels in Richtung "spät", als deutlich nach dem oberen Totpunkt des Kolbens im Zündzyklus umfassen. Dabei wird der thermische Wirkungsgrad des Verbrennungsmotors abgesenkt und die Abgasenthalpie erhöht. Die hierbei erzielbare Wirkungsgradabsenkung ist durch den maximalen Spätzündwinkel durch die Laufruhe des Motors begrenzt, da die Spätverlagerung der Verbrennung mit schlechteren Entflammungs- und Verbrennungsrandbedingungen verbunden ist. Das bekannte Verfahren ist also insofern nicht zufriedenstellend, da dieses mit einer Verschlechterung der Entflammungsbedingungen aufgrund des späten Zündzeitpunktes einhergeht. Ferner ist bekannt, den Drei-Wege-Katalysator durch ein externes Heizmittel, beispielsweise ein elektrisches Heizelement oder einen Abgasbrenner zu beheizen, damit der Katalysator schneller seine Light-Off-Temperatur erreicht und schneller nach einem Kaltstart zur wirksamen Konvertierung von limitierten Emissionen zur Verfügung steht.

Nachteilig bei den aus dem Stand der Technik bekannten Abgasnachbehandlungssystemen ist jedoch, dass die bekannten innermotorischen Heizmaßnahmen voraussichtlich nicht ausreichend sind, um die Anforderungen der Abgasnorm EU7 unter allen Betriebsbedingungen zu erfüllen. Auch mit motorexternen Heizmitteln existiert ein kurzer Zeitraum, bei dem die Abgasnachbehandlungskomponenten noch nicht ihre Light-Off-Temperatur erreicht haben und die Rohemissionen unkonvertiert an die Umwelt emittiert werden. Zudem führen motorexterne Heizmittel zu einer deutlichen Verteuerung des Abgasnachbehandlungssystems und zu konstruktivem Mehraufwand, was insbesondere bei kompakten Motorräumen zu einem Platzproblem beziehungsweise zu Herausforderungen beim Packaging führen kann.

Aus der DE 100 02 483 A1 ist ein Verfahren zum schnellen Aufheizen von Abgasnachbehandlungskomponenten an einer Brennkraftmaschine mit Ventilsteuerung bekannt. Dabei weist ein Brennraum der Brennkraftmaschine zumindest ein Auslassventil auf. Bei dem Verfahren werden in der Kompressionsphase der Brennkraftmaschine die Auslassventile zur Einsteuerung von Sekundärluft oder von einem Brennstoff-Luftgemisch zur Nachverbrennung kurzzeitig geöffnet. Die DE 100 02 483 A1 offenbart ferner eine Brennkraftmaschine zur Durchführung des Verfahrens mit einer vollvariablen hydraulischen, pneumatischen und/oder elektrischen Ventilsteuerung, wobei eine entsprechende Ansteuerung der Ventilsteuerung über ein elektronisches Steuergerät erfolgt.

Aus der DE 103 48 774 A1 ist ein Verfahren zur Lufteinblasung für eine thermische Nachbehandlung von Abgasen in einem Abgastrakt einer Brennkraftmaschine bekannt. Die Lufteinblasung wird mit geringem Aufwand dadurch erreicht, dass während einer Warmlaufphase einzelne Zylinder in der Weise gesteuert werden, dass sie die Funktion einer Luftpumpe zum Einblasen der Luft in den Abgastrakt übernehmen.

Die US 10 954 869 B1 offenbart einen Verbrennungsmotor mit variabler Ventilsteuerung sowie ein Verfahren zum Öffnen und Schließen von Auslassventilen bei einem solchen Verbrennungsmotor. In einem Ausführungsbeispiel ist ein zweifaches Öffnen der Auslassventile bei einem Ladungswechsel durch zwei unterschiedliche Nocken einer Nockenwelle vorgesehen, sodass zumindest ein Teil der unverbrannten Kohlenwasserstoffe in dem Zylinder verbleibt und nicht in die Abgasanlage ausgeschoben wird.

Aus der DE 103 51 375 B4 ist ein Verfahren zum Steuern eines Verbrennungsmotors bekannt, der in einem Viertaktbetrieb einen Einlass-, Verdichtungs-, Arbeits- und Auslasstakt zyklisch durchläuft. Der Verbrennungsmotor ist mit einem variablen Ventilzeitgebungssystem ausgestattet, wobei der Betrieb des Verbrennungsmotors vorübergehend derart erfolgt, dass mindestens das Einlassventil für das Einlassventil geöffnet wird, während sich der Kolben im Arbeitstakt in dem Zylinder abwärts bewegt, so dass die Einlassluft von dem Einlasssystem in den Zylinder zugeführt wird.

Aus der US 2014 / 0 014 066 A1 ist ein System für einen Viertakt-Verbrennungsmotor offenbart, wobei das System Folgendes umfasst: mindestens zwei Zylinder; eine Kraftstoff-Direkteinspritzvorrichtung; ein System zur variablen Ventilsteuerung; eine Motorsteuerung zur Steuerung der Funkenzündung und der Ventilsteuerung; wobei unterhalb einer unteren Lastschwelle ein erster Zylinder deaktiviert wird, eine Kraftstoffeinspritzung in einen Brennraum des ersten Zylinders erfolgt und ein Auslassventil des ersten Auslassventils des ersten Zylinders während eines Verdichtungstakts geöffnet ist.

Die DE 10 2019 204 091 A1 beschreibt ein Verfahren zum Starten eines Verbrennungsmotors mit einem verstellbaren Ventiltrieb, wobei der Verbrennungsmotor mittels eines elektrischen Antriebs beschleunigt wird. Der Ventiltrieb des Verbrennungsmotors wird vor und/oder zu Beginn der Beschleunigung des Verbrennungsmotors in einen Anlassermodus umgesteuert, indem während wenigstens eines Teils des Arbeitstakts und/oder Verdichtungstakts ein Einströmen von Gas in einen Zylinder und/oder ein Ausströmen von Gas aus einem Zylinder durch ein geöffnetes Ventil erfolgen kann und der Verbrennungsmotor zunächst in diesem Anlassermodus beschleunigt wird, bevor der Ventiltrieb in einen für den Betrieb des Verbrennungsmotors vorgesehenen Betriebsmodus umgesteuert wird.

Ferner ist aus der DE 10 2019 113 738 A1 eine Ventilbetätigungsvorrichtung eines Verbrennungsmotors bekannt, die eine Einlassnockenwelle und eine Auslassnockenwelle umfasst. Dabei kombiniert die Ventilbetätigungsvorrichtung schaltbare Schlepphebel sowie Mehrfach- und Einfachnocken, die teilweise von einer Einlassschiebehülse, die axial verschiebbar auf einer Grundwelle der Einlassnockenwelle angeordnet ist und/oder eine Auslassschiebehülse, die axial verschiebbar auf einer Grundwelle der Auslassnockenwelle angeordnet ist. Mittels einer solchen Ventilbetätigungsvorrichtung kann auf möglichst einfache konstruktive Weise ein Normalbetrieb des Verbrennungsmotors sowie ein Teilbetrieb, in dem zumindest ein zweiter Brennraum des Verbrennungsmotors deaktiviert ist, sowie ein Heizbetrieb, in dem aus dem zweiten Brennraum relativ heißes Abgas ausgestoßen wird, realisiert werden. Weiterhin ermöglicht ein solcher Ventiltrieb eine Dekompression der Brennräume während eines Startvorgangs.

Die JP 2016 011 589 A beschreibt eine Motor-Ventiltrieb-Steuereinheit. Die Motor-Ventiltrieb-Steuereinheit ist dazu eingerichtet, eine Verbesserung des Ansprechverhaltens in Bezug auf eine Änderung einer internen EGR-Rate und dadurch eine Verbesserung des Ansprechverhaltens in Bezug auf eine Änderung eines Motorbetriebszustandes zu erreichen.

Der Erfindung liegt nun die Aufgabe zugrunde, bei einem fremdgezündeten Verbrennungsmotor das Aufheizen einer Abgasnachbehandlungskomponente, insbesondere eines Drei-Wege-Katalysators, in der Abgasanlage zu verbessern.

Die Aufgabe wird durch ein Verfahren zum Aufheizen einer Abgasnachbehandlungskomponente in einer Abgasanlage eines Verbrennungsmotors mit mindestens einem Brennraum, vorzugsweise mehreren Brennräumen, gelöst. Dabei ist der Brennraum durch einen verschiebbaren Kolben begrenzt und weist eine Einlassöffnung auf, welche mit einem Ansaugtrakt des Verbrennungsmotors verbunden und durch ein Einlassventil verschließbar ist. Der Brennraum weist ferner eine Auslassöffnung auf, welche mit einer Abgasanlage verbunden und durch ein Auslassventil verschließbar ist. An dem Brennraum und/oder an dem Ansaugtrakt ist ein Kraftstoffinjektor zur Einspritzung eines Kraftstoffs angeordnet. Ferner ist an dem Brennraum eine Zündkerze angeordnet, welche dazu eingerichtet ist, ein brennfähiges Kraftstoff-Luft-Gemisch in dem Brennraum zu entzünden. Der Verbrennungsmotor weist einen Ventilhubkurvenumschaltmechanismus auf, welcher eine Verschiebung und/oder Veränderung der Öffnungszeiten des Auslassventils und eine Verschiebung und/oder Veränderung der Öffnungszeiten des Einlassventils ermöglicht. Das Verfahren umfasst folgende Schritte:
- Öffnen des Einlassventils, wobei Frischluft zur Herstellung eines zündfähigen Kraftstoff-Luft-Gemischs in den Brennraum einströmt,
- Schließen des Einlassventils, wobei im Brennraum ein zündfähiges Kraftstoff-Luft-Gemisch hergestellt wird,
- Zünden des zündfähigen Kraftstoff-Luft-Gemischs in einem Arbeitstakt des Brennraums, wodurch sich der Kolben von einem oberen Totpunkt in Richtung eines unteren Totpunkts bewegt,
- Öffnen des Auslassventils, wobei die bei der Verbrennung entstehenden Abgase zumindest teilweise in die Abgasanlage ausströmen,
- Schließen des Auslassventils und erneutes Öffnen des Einlassventils, wenn sich der Kolben nach der Zündung des zündfähigen Kraftstoff-Luft-Gemischs in einer Abwärtsbewegung befindet, wodurch zusätzliche Frischluft in den Brennraum angesaugt wird, und
- Schließen des Einlassventils und erneutes Öffnen des Auslassventils, wobei die beim erneuten Öffnen des Einlassventils in den Brennraum angesaugte Frischluft als Sekundärluft in die Abgasanlage eingebracht wird.

Es sind somit je zwei Ventilerhebungskurven für die Ein- und Auslassventile vorgesehen, zwischen denen umgeschaltet werden kann - je eine Ventilerhebungskurve für den Normalbetrieb und je eine Ventilerhebungskurve für den Katalysatorheizbetrieb. Der Katalysatorheizbetrieb stellt dabei den Kern des hier beschriebenen Verfahrens dar.

Das erfindungsgemäße Verfahren ermöglicht es, durch die Einbringung von Sekundärluft und zusätzlichem Kraftstoff die Abgasenthalpie des fremdgezündeten Verbrennungsmotors deutlich zu erhöhen. Dabei werden sowohl der Abgasmassenstrom als auch die Abgastemperatur erhöht. Zur Maximierung der Abgasenthalpie erfolgt die Veränderung der Öffnungszeiten der Ventile, insbesondere die gegenüber konventionellen Katalysatorheizverfahren Frühverlagerung des Auslassöffnens. Dadurch wird eine Absenkung des Wirkungsgrades des Verbrennungsmotors erreicht, sodass die exotherme Umsetzung des Kraftstoffs zumindest anteilig in der Abgasanlage erfolgt und somit der Wärmeeintrag in die Abgasnachbehandlungskomponente maximiert wird. Da der Verbrennungsmotor für die Sekundärluftförderung als Kolbenpumpe genutzt wird hat er eine Fördercharakteristik, die sich grundlegend von der üblicher Sekundärluftgebläse unterscheidet. Diese sind oft als Strömungsmaschinen nach Art eines Radialgebläses aufgebaut und weisen somit prinzipbedingt eine hohe Abgasgegendrucksensitivität des geförderten Luftstroms auf. Dieser Nachteil ist bei Kolbenpumpen deutlich reduzierter vorhanden und stellt somit einen entscheidenen Vorteil des hier beschriebenen Verfahrens bezüglich dessen robuster Abstimmung dar.

Das erfindungsgemäße Verfahren nutzt eine signifikante Frühverlagerung des Öffnungszeitpunktes der Auslassventile, um die zur Momentenerzeugung effektiv nutzbare Expansionsphase zu verkürzen. Bei dem erfindungsgemäßen Verfahren wird die Auslassphase zudem verkürzt, sodass nach dem Schließen der Auslassventile noch ein Teil der Expansionsphase zur Verfügung steht. Dieser Teil der Expansionsphase wird durch das Schließen der Auslassventile und das erneute Öffnen der Einlassventile genutzt, um weitere Frischluft in den Brennraum anzusaugen und diese Frischluft in einer nachfolgenden Kompressionsphase als Sekundärluft in die Abgasanlage auszuschieben, wobei die noch im Brennraum verbliebenen unverbrannten Abgaskomponenten sowie gegebenenfalls zusätzlich in den Brennraum eingespritzter Kraftstoff mit der Sekundärluft exotherm in der Abgasanlage umgesetzt werden und somit die Abgasnachbehandlungskomponente, insbesondere einen Drei-Wege-Katalysator, aufheizen.

Erfindungsgemäß ist vorgesehen, dass während oder nach dem erneuten Öffnen des Einlassventils zusätzlicher Kraftstoff in den Brennraum eingebracht wird, welcher zusammen mit der Sekundärluft nach dem Schließen des Einlassventils und dem erneuten Öffnen des Auslassventils exotherm in der Abgasanlage umgesetzt wird. Durch die exotherme Umsetzung des zusätzlichen Kraftstoffs durch die Sekundärluft kann die Abgasenthalpie weiter gesteigert werden. Dadurch ist ein noch effizienteres Aufheizen der Abgasnachbehandlungskomponente auf ihre Light-Off-Temperatur möglich.

Durch die in den abhängigen Ansprüchen aufgeführten Merkmale sind vorteilhafte Weiterentwicklungen und Verbesserungen des im unabhängigen Anspruch aufgeführten Verfahrens zum Aufheizen der Abgasnachbehandlungskomponente möglich.

Gemäß einer bevorzugten Ausgestaltung des Verfahrens ist vorgesehen, dass eine Zündung des zündfähigen Kraftstoff-Luft-Gemischs in einem Bereich von 20°KW vor ZOT bis 10°KW nach ZOT erfolgt. Der Kurbelwinkel (KW) beschreibt den Winkel der Kurbelwelle im Verhältnis zum oberen Totpunkt (OT) des Kolbens. Da der Kolben bei einem Verbrennungszyklus einen Kurbelwinkel von 720° durchläuft und somit zweimal einen oberen Totpunkt erreicht, wird zwischen einem oberen Totpunkt der Zündung (ZOT) und einem oberen Totpunkt beim Ladungswechsel unterschieden. Durch eine Zündung in dem Bereich von 20°KW vor ZOT bis 10°KW nach ZOT liegt der Zündzeitpunkt im Vergleich zu einer aus dem Stand der Technik bekannten Spätverstellung des Zündwinkels in einem Bereich erhöhten Drucks und Temperatur, sodass ein vergleichsweise günstigerer thermodynamischer Zustand zur Entflammung vorliegt, wodurch die Entflammung und Laufruhe verbessert wird und Zündsystem wie z.B. Vorkammerzündkerzen eingesetzt werden können, die sonst aufgrund Ihrer erhöhten Anforderungen bezüglich der thermodynamischen Randbedingungen in diesem Betriebszustand des Verbrennungsmotors nicht nutzbar sind. Ein vergrößerter Wärmeeintrag in die Abgasanlage erfolgt zum einen durch das im Vergleich zu bekannten Heizmaßnahmen frühe Öffnen der Auslassventile, was eine Absenkung des Wirkungsgrades nach sich zieht sowie durch die Erhöhung der Abgasenthalpie durch die zusätzliche Umsetzung von Sekundärluft und zusätzlichem Kraftstoff, welche im Wesentlichen nicht zur Drehmomenterzeugung des Verbrennungsmotors beitragen. Dadurch wird mehr Abwärme in die Abgasanlage eingetragen, wodurch die Abgasnachbehandlungskomponente schneller aufgeheizt wird.

In einer vorteilhaften Ausgestaltung des Verfahrens ist vorgesehen, dass das Öffnen des Auslassventils in einem Bereich von 30°KW nach ZOT bis 50°KW nach ZOT erfolgt. Durch ein frühes Öffnen der Auslassventile wird die ansonsten im Expansionstakt auf den Kolben wirkende Energie anteilig in die Abgasanlage eingetragen, wobei zumindest eine Teilmenge an unverbrannten Abgaskomponenten im Brennraum des Verbrennungsmotors verbleibt. Diese Teilmenge kann dann nachfolgend mit der Sekundärluft exotherm umgesetzt werden, wodurch die Abgasnachbehandlungskomponente weiter aufgeheizt wird.

Darüber hinaus ist in einer vorteilhaften Ausgestaltung des Verfahrens vorgesehen, dass das Schließen des Auslassventils in einem Bereich von 80° KW bis 100°KW nach ZOT und das erneute Öffnen des Einlassventils in einem Bereich von 90°KW nach ZOT bis 110°KW nach ZOT erfolgt. Durch ein frühes Schließen der Auslassventile und das erneute Öffnen der Einlassventile kann die weitere Abwärtsbewegung des Kolbens im Expansionstakt dazu genutzt werden, um erneut Frischluft anzusaugen und diese nachfolgend in einer Kompressionsphase als Sekundärluft in die Abgasanlage auszuschieben.

In einer vorteilhaften Ausgestaltung des Verfahrens ist vorgesehen, dass das Einlassventil nach dem erneuten Öffnen im Bereich von 170°KW bis 190°KW nach dem ZOT wieder schließt. Somit kann die Kolbenabwärtsbewegung bestmöglich zur Maximierung der angesaugten Luftmasse verwendet werden. Es ist sinnvoll, die Einlassventile im Bereich des unteren Totpunktes zu schließen, um in einer nachfolgenden Kompressionsphase ein Ausschieben der Frischluft und der im Brennraum verbliebenden Abgase in den Ansaugtrakt zu vermeiden.

Zudem strömt kurz nach dem unteren Totpunkt keine weitere Frischluft mehr in den Brennraum ein, sodass ein noch längeres Öffnen der Einlassventile kontraproduktiv wäre. So kann die Kolbenbewegung bestmöglich zur Maximierung der angesaugten Luftmasse genutzt werden.

Ferner ist in einer vorteilhaften Ausführungsform des Verfahrens vorgesehen, dass das erneute Öffnen des Auslassventils in einem Bereich von 180°KW nach ZOT und 220°KW nach ZOT erfolgt. Durch ein Öffnen der Auslassventile nach dem unteren Totpunkt wird die Sekundärluft und das noch im Brennraum verbliebene Abgas sowie gegebenenfalls in den Brennraum zusätzlich eingespritzter Kraftstoff in die Abgasanlage eingetragen, wo die Sekundärluft mit den unverbrannten Abgas- oder Kraftstoffkomponenten exotherm umgesetzt wird. Dadurch ist ein besonders effizientes Aufheizen der Abgasnachbehandlungskomponente möglich.

In einer vorteilhaften Ausgestaltung des Verfahrens ist vorgesehen, dass das Auslassventil in einem Bereich von 340°KW bis 380°KW nach ZOT schließt. Im Bereich des oberen Totpunkts des Ladungswechsels, also 360°KW nach ZOT, ist ein nahezu vollständiges Ausschieben der Gase im Brennraum in die Abgasanlage abgeschlossen. Daher ist es zielführend, die Auslassventile zu diesem Zeitpunkt zu schließen, um einen möglichst vollständigen Ladungswechsel im Brennraum zu erzielen.

In einer vorteilhaften Ausgestaltung des Verfahrens ist vorgesehen, dass das Einlassventil etwa 360°KW nach ZOT, also etwa an einem oberen Totpunkt des Ladungswechsels, öffnet. Unter "etwa" ist in diesem Zusammenhang eine Abweichung von maximal 15°KW, vorzugsweise von maximal 10°KW, besonders bevorzugt von maximal 5°KW zu verstehen. Dadurch kann der volle Expansionshub in dem Ladungswechselabschnitt genutzt werden, um neue Frischluft in den Brennraum anzusaugen.

In einer vorteilhaften Ausgestaltung des Verfahrens schließt das Einlassventil etwa 540°KW nach ZOT. Ab diesem Kurbelwinkel wird keine signifikante weitere Füllung des Brennraums mit Frischluft erreicht. Vielmehr würde eine deutliche Verlängerung der Öffnungszeiten über 540°KW hinaus dazu führen, dass die Frischluft wieder in den Ansaugtrakt zurückgeschoben wird. Eine Verkürzung der Ansaugphase würde zu einem Miller-Effekt führen, was mit einer Absenkung des Liefergrades verbunden wäre und somit zu einer Minimierung des Luftdurchsatzes und der Abgasenthalpie führen würde.

In einer weiteren vorteilhaften Ausgestaltung des Verfahrens ist vorgesehen, dass der Verbrennungsmotor als direkteinspritzender Verbrennungsmotor ausgeführt ist und eine erste Kraftstoffmenge nach dem Schließen des Einlassventils und eine zweite Kraftstoffmenge nach dem erneuten Öffnen des Einlassventils in den Brennraum eingespritzt wird. Dadurch kann die in den Brennraum und in die Abgasanlage eingebrachte Kraftstoffmenge besonders exakt gesteuert werden. Insbesondere kann die zweite Kraftstoffmenge, welche zusammen mit der Sekundärluft im Wesentlichen in der Abgasanlage exotherm zum Aufheizen der Abgasnachbehandlungskomponenten umgesetzt wird, exakt gesteuert werden, sodass ein besonders effizientes Aufheizen des Abgases erfolgt.

Die Erfindung ist jedoch nicht auf direkteinspritzende Ottomotoren beschränkt, sondern lässt sich auch bei fremdgezündeten Motoren umsetzen, bei denen der Kraftstoff in den Ansaugtrakt eingespritzt wird.

In einer vorteilhaften Ausgestaltung des Verfahrens ist vorgesehen, dass eine Temperatur der Abgasnachbehandlungskomponente ermittelt und das Verfahren eingeleitet wird, wenn die ermittelte Temperatur der Abgasnachbehandlungskomponente unterhalb einer ersten Schwellentemperatur liegt. Die erste Schwellentemperatur entspricht dabei vorzugsweise einer Light-Off-Temperatur der Abgasnachbehandlungskomponente. Das Ermitteln der Temperatur der Abgasnachbehandlungskomponente kann insbesondere durch einen Temperatursensor an der Abgasnachbehandlungskomponente oder durch ein Berechnungsmodell im Steuergerät des Verbrennungsmotors erfolgen. Durch das Ermitteln einer Temperatur der Abgasnachbehandlungskomponente kann auf einfache Art und Weise bestimmt werden, ob ein zusätzliches Aufheizen der Abgasnachbehandlungskomponente beim Startvorgang des Verbrennungsmotors notwendig ist. Dies ist vorteilhaft, da somit unnötige Heizphasen, welche mit einem Kraftstoffmehrverbrauch verbunden sind, vermieden werden können.

Ein weiterer Teilaspekt der Erfindung betrifft einen Verbrennungsmotor mit mindestens einem Brennraum, vorzugsweise mit mindestens drei Brennräumen. Jeder Brennraum ist dabei durch einen verschiebbaren Kolben begrenzt. An jedem Brennraum ist mindestens eine Einlassöffnung und mindestens eine Auslassöffnung vorgesehen, welche den Brennraum mit einem Ansaugtrakt beziehungsweise einer Abgasanlage des Verbrennungsmotors verbinden. Jede Einlassöffnung ist durch ein Einlassventil und jede Auslassöffnung durch ein Auslassventil verschließbar. An jedem Brennraum oder in dem Ansaugtrakt sind ein Kraftstoffinjektor zur Einspritzung eines Kraftstoffs und eine Zündkerze zur Entzündung eines zündfähigen Kraftstoff-Luft-Gemischs angeordnet. Der Verbrennungsmotor weist ferner einen Ventilhubkurvenumschaltmechanismus auf, welcher eine Verschiebung und/oder Verlängerung der Öffnungszeiten des Auslassventils ermöglicht. In der Abgasanlage ist eine Abgasnachbehandlungskomponente angeordnet. Der Verbrennungsmotor steht mit einem Steuergerät in Wirkverbindung, welches dazu eingerichtet ist, ein erfindungsgemäßes Verfahren zum Aufheizen der Abgasnachbehandlungskomponente durchzuführen, wenn ein in einer Speichereinheit des Steuergeräts abgelegter maschinenlesbarer Programmcode durch eine Recheneinheit des Steuergeräts ausgeführt wird.

Ein solcher Verbrennungsmotor ermöglicht es, auch ohne externe Heizmaßnahmen wie einen Abgasbrenner oder einen elektrisch beheizbaren Katalysator die Temperatur einer Abgasnachbehandlungskomponente in einem kurzen Zeitintervall auf eine Temperatur anzuheben, bei der eine effiziente Konvertierung der Schadstoffe im Abgasstrom des Verbrennungsmotors möglich ist.

In einer bevorzugten Ausgestaltung der Erfindung ist der Verbrennungsmotor als ein mittels eines Abgasturboladers aufgeladener direkteinspritzender Ottomotor ausgeführt. Direkteinspritzende Ottomotoren sind aufgrund ihres hohen thermischen Wirkungsgrades besonders kritisch, wenn es um ein schnelles Aufheizen der Abgasnachbehandlungskomponente geht. Diese Herausforderung wird bei mittels Abgasturbolader aufgeladenen direkteinspritzenden Ottomotoren noch vergrößert, da vor dem Aufheizen der Abgasnachbehandlungskomponente zunächst noch die Turbine des Abgasturboladers erwärmt werden muss. Dabei ist das vorgeschlagene Verfahren zum Aufheizen einer Abgasnachbehandlungskomponente insbesondere bei einem mittels Abgasturbolader aufgeladenen direkteinspritzenden Ottomotor besonders vorteilhaft, um hier zeitlich begrenzt eine starke Absenkung des thermischen Wirkungsgrades herbeizuführen und in möglichst kurzer Zeit eine entsprechende Wärmemenge in die Abgasanlage einbringen zu können.

Gemäß einer vorteilhaften Ausgestaltung des Verbrennungsmotors ist die Zündkerze als Hakenzündkerze ausgeführt. Hakenzündkerzen sind konstruktiv einfacher und in der Herstellung kostengünstiger als Vorkammerzündkerzen. Jedoch bieten Vorkammerzündkerzen einen Vorteil in der Definition eines kleinen Zündraums und bei der Ausbreitung der Flammenfront in dem Brennraum. Das erfindungsgemäße Verfahren ist so ausgelegt, dass mit einer einfachen Hakenzündkerze betriebssicher das Kraftstoff-Luft-Gemisch im Brennraum entzündet werden kann und ein größtmöglicher Wärmeeintrag in die Abgasanlage zum Aufheizen der Abgasnachbehandlungskomponente sichergestellt ist. Aufgrund des gegenüber konventionellen Katheizmaßnahmen höheren Druck- und Temperaturniveaus zum Zündzeitpunkt resultieren verbesserte Entflammungsbedingungen, die den Einsatz einer passiven Vorkammerzündkerze ermöglichen.

In einer vorteilhaften Ausgestaltung ist die Abgasnachbehandlungskomponente ein Drei-Wege-Katalysator oder ein Vier-Wege-Katalysator. Die Konvertierung der Schadstoffe bei einem direkteinspritzenden Ottomotor erfolgt in der Regel durch einen oder mehrere Drei-Wege-Katalysator(en) und einem dem Drei-Wege-Katalysator nachgeschalteten Partikelfilter. Zur Einhaltung der Emissionsgrenzwerte ist es notwendig, zumindest einen Drei-Wege-Katalysator möglichst zeitnah auf seine Light-Off-Temperatur aufzuheizen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einer Abgasanlage zur Durchführung eines erfindungsgemäßen Verfahrens zum Aufheizen eines Katalysators in einer schematischen Darstellung,
- Figur 2: eine weitere schematische Darstellung eines Verbrennungsmotors zur Durchführung eines erfindungsgemäßen Verfahrens zum Aufheizen eines Katalysators,
- Figur 3: eine schematische Darstellung eines Druck-Volumen-Diagramms (pV-Diagramm) bei der Durchführung eines idealen Ottokreisprozess,
- Figur 4: eine vereinfachte Darstellung eines Brennraums eines Verbrennungsmotors zur Durchführung eines solchen Verfahrens zum Aufheizen eines Katalysators,
- Figur 5: einen Verlauf von Brennraumdruck und Ventilhub der Einlass- und Auslassventile bei einem bekannten Verfahren zum Aufheizen der Abgasanlage durch eine Spätverstellung des Zündwinkels; und
- Figur 6: einen Verlauf von Brennraumdruck und Ventilhub der Einlass- und Auslassventile bei der Durchführung eines erfindungsgemäßen Verfahrens zum Aufheizen einer Abgasnachbehandlungskomponente.

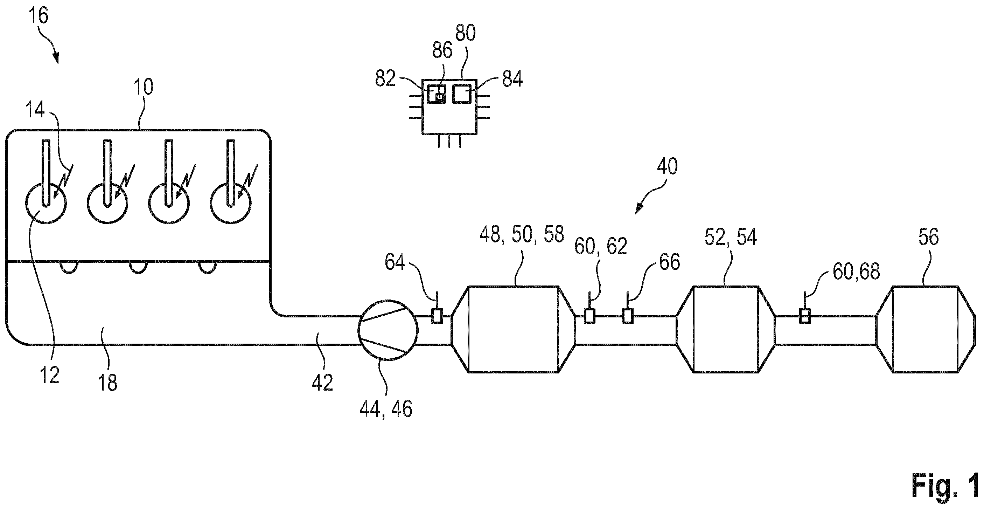

Figur 1 zeigt einen Verbrennungsmotor 10 mit mindestens einem Brennraum 12, vorzugsweise wie in Figur 1 dargestellt mit mindestens drei Brennräumen 12. Der Verbrennungsmotor 10 ist als direkteinspritzender Ottomotor ausgeführt. Dazu sind an jedem Brennraum 12 eine Zündkerze 14 zur Entzündung eines zündfähigen Kraftstoff-Luft-Gemisches und ein Kraftstoffinjektor 30 zum Einspritzen eines Kraftstoffs in den jeweiligen Brennraum 12 angeordnet. Jeder Brennraum 12 ist über mindestens eine Einlassöffnung 16 mit einem Ansaugtrakt 34 und über mindestens eine Auslassöffnung 18 mit einer Abgasanlage 40 verbunden. Eine fluidische Verbindung von dem Ansaugtrakt 34 in den Brennraum 12 kann durch ein Einlassventil 20 verschlossen werden. Eine fluidische Verbindung von dem Brennraum 12 in die Abgasanlage 40 kann durch ein Auslassventil 22 verschlossen werden.

Die Abgasanlage 40 umfasst einen Abgaskanal 42, in welchem in Strömungsrichtung eines Abgasstroms des Verbrennungsmotors 10 durch die Abgasanlage 40 eine Turbine 46 eines Abgasturboladers 44 und stromabwärts der Turbine 46 mindestens eine Abgasnachbehandlungskomponente 48 angeordnet sind. Bevorzugt sind wie in Figur 1 dargestellt stromabwärts der Turbine 46 ein erster Drei-Wege-Katalysator 50 und stromabwärts des ersten Drei-Wege-Katalysators 50 mindestens eine weitere Abgasnachbehandlungskomponente 52, insbesondere ein zweiter Drei-Wege-Katalysator 54, ein Oxidationskatalysator 58 und/oder ein Partikelfilter 56 angeordnet. Der zweite Drei-Wege-Katalysator 54 und der Partikelfilter 56 können auch in einem Bauteil zusammengefasst als sogenannter Vier-Wege-Katalysator ausgeführt sein. Ferner können in der Abgasanlage 40 ein oder mehrere Abgassensoren 60 zur Überwachung der Funktionsfähigkeit der Abgasnachbehandlungskomponente 48, 52 angeordnet sein. Bevorzugt sind in der Abgasanlage 40 stromaufwärts des ersten Drei-Wege-Katalysators 50 eine erste Lambdasonde 64 und stromabwärts des ersten Drei-Wege-Katalysators 50 eine zweite Lambdasonde 66 sowie ein Temperatursensor 62 sowie gegebenenfalls ein Schadstoffsensor 68 angeordnet.

Der Verbrennungsmotor 10 steht mit einem Steuergerät 80 in Wirkverbindung, welches eine Speichereinheit 82 und eine Recheneinheit 84 umfasst. In der Speichereinheit 82 sind ein oder mehrere maschinenlesbare Programmcodes 86 zur Steuerung des Verbrennungsmotors 10, insbesondere zur Steuerung des Zündzeitpunktes der Zündkerze 14, der Einspritzmenge und des Einspritzzeitpunktes des Kraftstoffinjektors 30 und zur Steuerung der Öffnungszeiten der Ventile 20, 22 abgelegt.

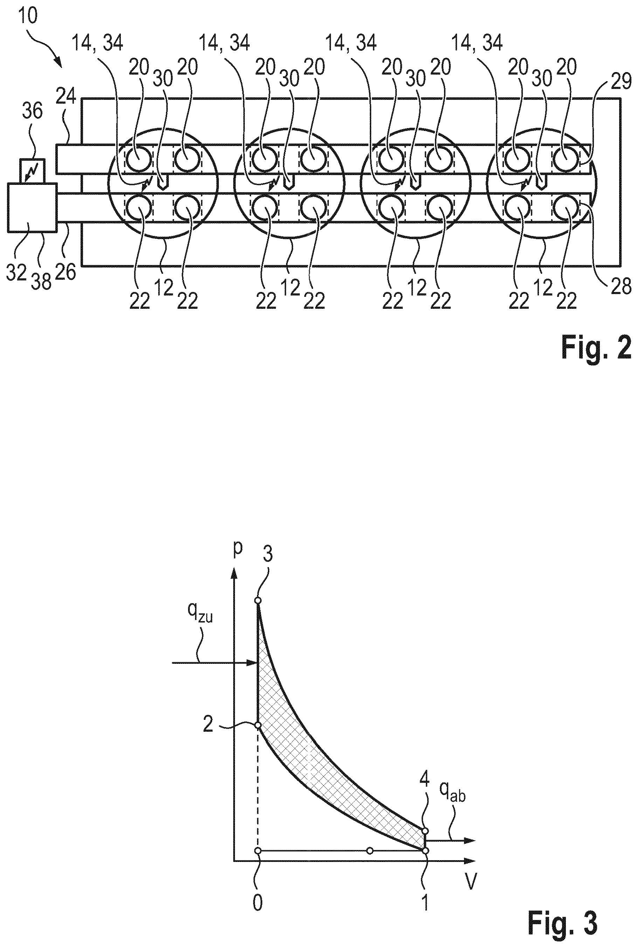

In Figur 2 ist der Verbrennungsmotor 10 in einer weiteren schematischen Darstellung gezeigt. Die Öffnungszeiten der Einlassventile 20 werden durch eine Einlassnockenwelle 24 gesteuert. Die Öffnungszeiten der Auslassventile 22 werden durch eine Auslassnockenwelle 26 gesteuert. Dabei sind an der Einlassnockenwelle 24 und an der Auslassnockenwelle 26 jeweils ein Ventilhubkurvenumschaltmechanismus 38 vorgesehen, mit welcher eine schaltbare Nockenkontur 28, 29, welche über einen Schaltmechanismus 36 aktiviert werden kann, zwischen einer ersten Öffnungskurve der Einlassventile 20 beziehungsweise der Auslassventile 22 und einer zweiten Öffnungskurve der Einlassventile 20 beziehungsweise der Auslassventile 22 umschalten kann.

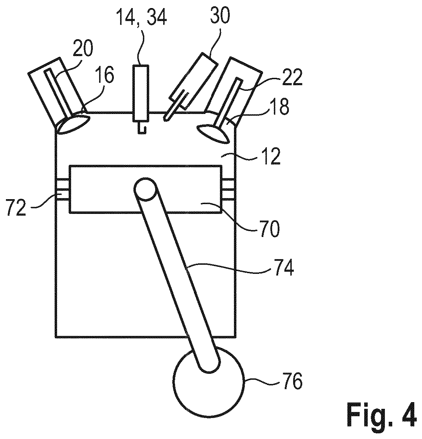

Figur 3 zeigt schematisch einen idealen Ottokreisprozess, welcher eine theoretische Grundlage für das erfindungsgemäße Verfahren liefert und Figur 4 zeigt schematisch einen Brennraum 12 eines Verbrennungsmotors 10 mit einem Kolben 70, welcher über eine Pleuelstange 74 mit einer Kurbelwelle 76 zur Durchführung für einen solchen Kreisprozess verbunden ist. Dabei ist der Brennraum 12 durch Kolbenringe 72 abgedichtet, welche einen Spalt zwischen dem Kolben und einer Zylinderwand des Brennraums 12 abdichten und an der Zylinderwand anliegen. Ferner sind in Figur 3 das Kompressionsvolumen V_{K} und das Hubvolumen V_{H} dargestellt. Bei einem solchen idealen Prozess sind keine Dissipationsverluste, mechanische Reibungsverluste oder dergleichen berücksichtigt. Ferner hat das Arbeitsgas über den gesamten Kreisprozess die gleichen Eigenschaften und Strömungsverluste werden nicht berücksichtigt. Ferner wird keine Durchmischung von Ladungsgemisch mit Abgas angenommen.

Bevorzugt betrifft die Erfindung ein Verfahren für einen direkteinspritzenden mittels eines Abgasturboladers 44 aufgeladenen Viertakt-Ottomotor. Ein Takt besteht jeweils aus einem Kolbenhub des Kolbens 70 beziehungsweise einer halben Kurbelwellenumdrehung. Beim Viertakt-Ottomotor lassen sich die Zustandsänderungen den Arbeitstakten zuordnen. Dies ist im Folgenden anhand der Figuren 3 und 4 beschrieben:
Der erste Takt, der Ansaugtakt, umfasst das Ansaugen, bei dem der Kolben 70 sich nach unten bewegt und der Brennraum 12 sich mit Frischluft füllt (Figur 4). Dies entspricht im Diagramm in Figur 3 der Verbindungslinie zwischen den Punkten 0 und 1.

Der zweite Takt, der Verdichtungs- oder Kompressionstakt, umfasst das Verdichten der Brennraumladung, wobei sich der Kolben 70 in Figur 4 nach links bewegt. Dies entspricht im Diagramm in Figur 3 der isentropen Verbindungslinie zwischen den Punkten 1 und 2 und die isochore Wärmezufuhr q_{ZU} erfolgt durch Zünden und Verbrennen der Gasladung, was der Verbindungslinie zwischen den Punkten 2 und 3 entspricht (Gleichraumverbrennung).

Der dritte Takt, der Expansions- oder Arbeitstakt, umfasst die isentrope Expansion, wobei der Kolben 70 in Figur 4 infolge der exothermen Verbrennung wieder nach unten bewegt wird. Dies entspricht im Diagramm in Figur 3 der Verbindungslinie zwischen den Punkten 3 und 4.

Der vierte Takt wird auch als Auslasstakt (Wärmeabfuhr) bezeichnet, wobei in Figur 4 der Kolben 70 sich wieder nach links bewegt und durch das Öffnen des Auslassventils 22 die Abgase im unteren Totpunkt ohne weitere Arbeitsleistung nach außen expandieren (Verbindungslinie zwischen den Punkten 4 und 1 in Figur 3) und der Rest des Abgases durch den Kolbenhub (Verbindunglinie zwischen den Punkten 1 und 0) nach außen geschoben wird. Dabei wird die im Abgas enthaltene Wärme q_{ab} an die Umgebung abgegeben. Der ideale Prozess berücksichtigt nicht, dass die Restmenge im Kompressionsraum nicht den Umgebungszustand erreicht.

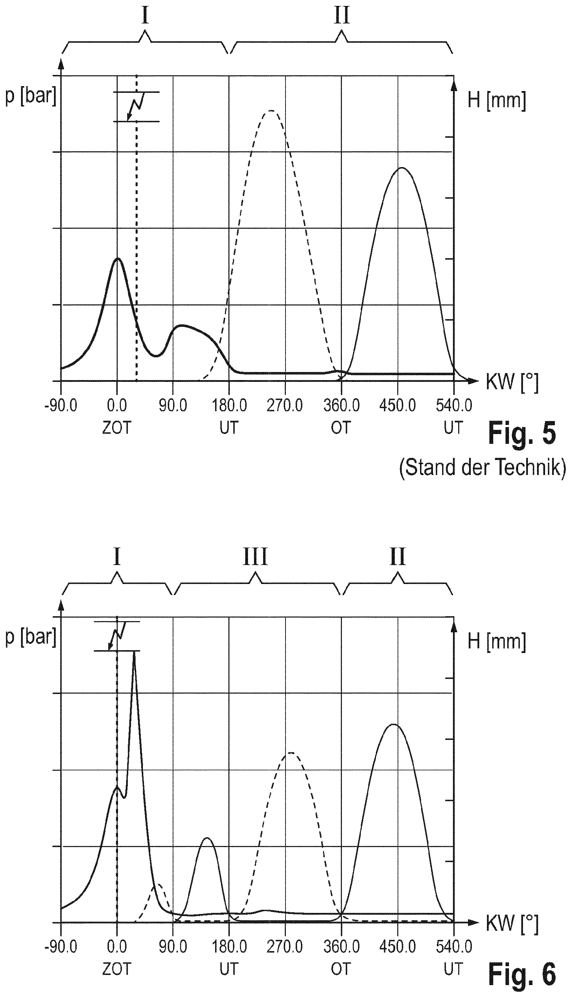

In Figur 5 ist ein aus dem Stand der Technik bekanntes Verfahren zur Erhöhung der Abgasenthalpie in einer Abgasanlage 40 eines Verbrennungsmotors 10 dargestellt. Das Verfahren eines Viertakt-Ottomotors weist dabei einen Arbeitszyklus I und einen alternierend zu dem Arbeitszyklus I durchgeführten Ladungswechselzyklus II auf. Dabei wird in dem Arbeitszyklus I der Zündwinkel in Richtung spät, beispielsweise in den Bereich von 20°KW bis 30°KW nach dem ZOT verstellt. Dadurch wird der thermische Wirkungsgrad des Verbrennungsmotors 10 verschlechtert, sodass ein geringerer Teil der im Kraftstoff enthaltenen Energiemenge zur Erzeugung eines Drehmoments genutzt wird und ein heißeres Abgas in die Abgasanlage 40 ausgeschoben wird. Dabei erfolgt ein Öffnen des Auslassventils 22 des Brennraums 12 zur Einleitung des Ladungswechselzyklus II etwa 150°KW nach dem ZOT. Das heiße Abgas strömt in die Abgasanlage 40 aus und erhitzt dort die Abgasnachbehandlungskomponente 48. Das Auslassventil 22 schließt etwa 360°KW nach ZOT, also an einem oberen Totpunkt des Ladungswechsels, während das Einlassventil 20 etwa zu diesem Zeitpunkt öffnet. In der nachfolgenden Expansionsphase wird neue Frischluft in den Brennraum 12 angesaugt. Das Einlassventil 20 schließt zum Abschluss des Ladungswechselzyklus etwa am unteren Totpunkt des Ladungswechsels, also etwa 540°KW nach ZOT.

In Figur 6 ist ein erfindungsgemäßes Verfahren zum Aufheizen einer Abgasnachbehandlungskomponente 48, insbesondere eines Drei-Wege-Katalysators 50, in der Abgasanlage 40 eines Verbrennungsmotors 10 dargestellt. Bei dem erfindungsgemäßen Verfahren erfolgt in einem Arbeitszyklus I eine Zündung eines zündfähigen Kraftstoff-Luft-Gemischs in dem Brennraum 12 nahe dem ZOT in einem Bereich von 20°KW vor ZOT bis 10°KW nach ZOT. Nach der Zündung erfolgt ein frühes Öffnen des Auslassventils 22 im Bereich von etwa 40°KW nach ZOT. Das Auslassventil 22 wird etwa 90°KW nach dem ZOT wieder geschlossen und das Einlassventil 20 etwa 100°KW nach dem ZOT geöffnet, sodass die restliche Abwärtsbewegung des Kolbens 70 dazu genutzt werden kann, um Frischluft in den Brennraum 12 anzusaugen. Das Öffnen des Einlassventils 20 leitet einen Sekundärluftbetrieb III des Verbrennungsmotors 10 ein. In diesem Sekundärluftbetrieb III kann eine zweite Kraftstoffmenge in den Brennraum 12 und/oder in den Ansaugtrakt 34 eingespritzt werden, welche somit zusammen mit der Frischluft in den Brennraum 12 gelangt. Das Einlassventil 20 schließt etwa 180°KW nach ZOT, also etwa an einem unteren Totpunkt des Kolbens 70. Etwa 200°KW nach dem ZOT, also zu Beginn der Aufwärtsbewegung des Kolbens 70 wird das Auslassventil 22 erneut geöffnet, wobei die Sekundärluft zusammen mit dem noch im Brennraum 12 befindlichen brennbaren Abgas- und Kraftstoffkomponenten exotherm in der Abgasanlage 40 umgesetzt wird und somit die Abgasnachbehandlungskomponente 48 aufheizt. Das Auslassventil 22 schließt etwa 360°KW nach ZOT, also etwa am Ladungswechsel-OT. Das Schließen des Auslassventils 22 beendet den Sekundärluftbetrieb III. Das Einlassventil 20 wird etwa am Ladungswechsel-OT, also etwa 360°KW nach ZOT geöffnet, um Frischluft für den nächsten Arbeitszyklus I in den Brennraum 12 des Verbrennungsmotors 10 anzusaugen.

Zusammenfassend lässt sich festhalten, dass die vorliegende Erfindung eine signifikante Frühverlagerung des Öffnungszeitpunktes des Auslassventils 22 nutzt, um die zur Momentenerzeugung effektiv nutzbare Expansionsphase des Brennraums 12 zu verkürzen. Bei diesem Auslassvorgang wird eine große Abgasmasse in einem sehr kurzen Zeitraum in die Abgasanlage 40 ausgestoßen. Durch das Schließen des Auslassventils 22 nach diesem kurzen Zeitraum steht somit noch ein erheblicher Teil des Expansionstaktes zur Verfügung. Dieser verbleibende Teil des Expansionstaktes wird in der vorliegenden Erfindung durch ein weiteres Öffnen des Einlassventils 20 dazu genutzt, um zusätzliche Frischluft in den Brennraum 12 anzusaugen. Die nachfolgende Aufwärtsbewegung des Kolbens 70 wird in diesem Fall nicht zum Ausschieben des Abgases der Verbrennung, sondern im Wesentlichen zum Ausschieben der zuvor angesaugten zusätzlichen Frischluft genutzt und entspricht somit in seiner Wirkung dem Einblasen von Sekundärluft in die Abgasanlage 40. Die nachfolgende Abwärtsbewegung des Kolbens 70 wird, wie auch bei einem konventionellen Vier-Takt-Verfahren dazu benutzt, um Frischluft für einen nachfolgenden Arbeitszyklus I anzusaugen, die nach Einspritzung von Kraftstoff verdichtet und in dem Brennraum 12 exotherm zur Erzeugung eines Antriebsmoments umgesetzt wird.

### Bezugszeichenliste

- 10: Verbrennungsmotor
- 12: Brennraum
- 14: Zündkerze
- 16: Einlassöffnung
- 18: Auslassöffnung

- 20: Einlassventil
- 22: Auslassventil
- 24: Einlassnockenwelle
- 26: Auslassnockenwelle
- 28: zuschaltbarer Nocken Auslassnockenwelle
- 29: zuschaltbarer Nocken Einlassnockenwelle

- 30: Kraftstoffinjektor
- 32: Nockenwellenversteller
- 34: Ansaugtrakt
- 36: Schaltmechanismus für zuschaltbaren Nocken
- 38: Ventilhubkurvenumschaltmechanismus

- 40: Abgasanlage
- 42: Abgaskanal
- 44: Abgasturbolader
- 46: Turbine
- 48: Abgasnachbehandlungskomponente

- 50: Drei-Wege-Katalysator
- 52: weitere Abgasnachbehandlungskomponente
- 54: zweiter Drei-Wege-Katalysator
- 56: Partikelfilter
- 58: Oxidationskatalysator

- 60: Abgassensor
- 62: Temperatursensor
- 64: erste Lambdasonde
- 66: zweite Lambdasonde
- 68: Schadstoffsensor

- 70: Kolben
- 72: Kolbenringe
- 74: Pleuelstange
- 76: Kurbelwelle

- 80: Steuergerät
- 82: Speichereinheit
- 84: Recheneinheit
- 86: maschinenlesbarer Programmcode

- H: Hub
- KW: Kurbelwinkel
- p: Druck
- V_{K}: Kompressionsvolumen
- V_{H}: Hubvolumen
- q_{zu}: isochore Wärmezufuhr
- q_{ab}: im Abgas enthaltene Wärme

- I: Arbeitszyklus
- II: Ladungswechselzyklus
- III: Sekundärluftbetrieb

## Patentansprüche

1. Verfahren zum Aufheizen einer Abgasnachbehandlungskomponente (48) in einer Abgasanlage (40) eines Verbrennungsmotors (10) mit mindestens einem Brennraum (12), wobei der Brennraum (12) durch einen verschiebbaren Kolben (70) begrenzt ist und eine Einlassöffnung (16) aufweist, welche mit einem Ansaugtrakt (34) des Verbrennungsmotors (10) verbunden ist und durch ein Einlassventil (20) verschließbar ist, und eine Auslassöffnung (18) aufweist, welche mit einer Abgasanlage (40) verbunden ist und durch ein Auslassventil (22) verschließbar ist, wobei an dem Brennraum (12) und/oder an dem Ansaugtrakt (34) ein Kraftstoffinjektor (30) zur Einspritzung eines Kraftstoffs angeordnet ist, sowie mit einer Zündkerze (14), welche dazu eingerichtet ist, ein brennfähiges Kraftstoff-Luft-Gemisch in dem Brennraum (12) zu entzünden, sowie mit einem Ventilhubkurvenumschaltmechanismus (38), welcher eine Verschiebung und/oder Veränderung der Öffnungszeiten des Auslassventils (22) und eine Verschiebung und/oder Veränderung der Öffnungszeiten des Einlassventils (20) ermöglicht, umfassend folgende Schritte:
- Öffnen des Einlassventils (20), wobei Frischluft zur Herstellung eines zündfähigen Kraftstoff-Luft-Gemischs in den Brennraum (12) einströmt,
- Schließen des Einlassventils (20), wobei im Brennraum (12) ein zündfähiges Kraftstoff-Luft-Gemisch hergestellt wird,
- Zünden des zündfähigen Kraftstoff-Luft-Gemischs in einem Arbeitstakt des Brennraums (12), wodurch sich der Kolben (70) von einem oberen Totpunkt in Richtung eines unteren Totpunkts bewegt,
- Öffnen des Auslassventils (22), wobei die bei der Verbrennung entstehenden Abgase zumindest teilweise in die Abgasanlage (40) ausströmen,
- Schließen des Auslassventils (22) und erneutes Öffnen des Einlassventils (20), wenn sich der Kolben (70) nach der Zündung des zündfähigen Kraftstoff-Luft-Gemischs in einer Abwärtsbewegung befindet, wodurch zusätzliche Frischluft in den Brennraum (12) angesaugt wird, und
- Schließen des Einlassventils (20) und erneutes Öffnen des Auslassventils (22), wobei die beim erneuten Öffnen des Einlassventils (20) in den Brennraum (12) angesaugte Frischluft als Sekundärluft in die Abgasanlage (40) eingebracht wird, **dadurch gekennzeichnet, dass** während oder nach dem erneuten Öffnen des Einlassventils (20) zusätzlicher Kraftstoff in den Brennraum (12) eingebracht wird, welcher zusammen mit der Sekundärluft nach dem Schließen des Einlassventils (20) und dem erneuten Öffnen des Auslassventils (22) exotherm in der Abgasanlage (40) umgesetzt wird.

2. Verfahren nach Anspruch 1, wobei eine Zündung des zündfähigen Kraftstoff-Luft-Gemischs in einem Bereich von 20°KW vor ZOT bis 10°KW nach ZOT erfolgt.

3. Verfahren nach einem der Ansprüche 1 bis 2, wobei das Öffnen des Auslassventils (22) in einem Bereich von 30°KW nach ZOT bis 50°KW nach ZOT erfolgt.

4. Verfahren nach einem der Ansprüche 1 bis 3, wobei das Schließen des Auslassventils (22) in einem Bereich von 80° KW nach ZOT bis 100°KW nach ZOT und das erneute Öffnen des Einlassventils (20) in einem Bereich von 90°KW nach ZOT bis 110°KW nach ZOT erfolgt.

5. Verfahren nach einem der Ansprüche 1 bis 4, wobei das erneute Öffnen des Auslassventils (22) in einem Bereich von 180°KW nach ZOT und 220° KW nach ZOT erfolgt.

6. Verfahren nach einem der Ansprüche 1 bis 5, wobei der Verbrennungsmotor (10) als direkteinspritzender Verbrennungsmotor (10) ausgeführt ist und eine erste Kraftstoffmenge nach dem Schließen des Einlassventil (20) und eine zweite Kraftstoffmenge nach dem erneuten Öffnen des Einlassventils (20) in den Brennraum (12) eingespritzt wird.

7. Verbrennungsmotor (10) mit:
- mindestens einem Brennraum (12), wobei der Brennraum (12) durch einen verschiebbaren Kolben (70) begrenzt ist und eine Einlassöffnung (16) aufweist, welche mit einem Ansaugtrakt (34) des Verbrennungsmotors (10) verbunden ist und durch ein Einlassventil (20) verschließbar ist, und eine Auslassöffnung (18) aufweist, welche mit einer Abgasanlage (40) verbunden ist und durch ein Auslassventil (22) verschließbar ist, und an dem Brennraum (12) und/oder an dem Ansaugtrakt (34) ein Kraftstoffinjektor (30) zur Einspritzung eines Kraftstoffs in den Brennraum (12) angeordnet ist,
- einer Zündkerze (14), welche dazu eingerichtet ist, ein brennfähiges Kraftstoff-Luft-Gemisch in dem Brennraum (12) zu entzünden, sowie
- einem Ventilhubkurvenumschaltmechanismus (38), welcher eine Verschiebung und/oder Veränderung der Öffnungszeiten des Auslassventils (22) und des Einlassventils (20) ermöglicht,
- einer in der Abgasanlage (40) angeordneten Abgasnachbehandlungskomponente (48), und
- einem Steuergerät (80), welches dazu eingerichtet ist, ein Verfahren nach einem der Ansprüche 1 bis 6 auszuführen, wenn ein in einer Speichereinheit (82) des Steuergeräts (80) abgelegter maschinenlesbarer Programmcode (86) durch eine Recheneinheit (84) des Steuergeräts (80) ausgeführt wird.

8. Verbrennungsmotor (10) nach Anspruch 7, wobei der Ventilhubumschaltmechanismus (38) schaltbare Nocken (28, 29) aufweist, mit welchen die Öffnungszeiten des Auslassventils (22) und des Einlassventils (20) in einem ersten Schaltzustand des Ventilhubumschaltmechanismus (38) ein frühes Öffnen und Schließen des Auslassventils (22) zum Aufheizen der Abgasnachbehandlungskomponente (48) und in einem zweiten Schaltzustand ein spätes Öffnen des Auslassventils (22) mit dem Ziel einer wirkungsgradoptimierten Verbrennung in dem Brennraum (12) ermöglichen.

9. Verbrennungsmotor (10) nach Anspruch 7 oder 8, wobei die Abgasnachbehandlungskomponente (48) ein Drei-Wege-Katalysator (50) oder ein Vier-Wege-Katalysator ist.

## Claims

1. Method for heating an exhaust gas post-treatment component (48) in an exhaust system (40) of an internal combustion engine (10) having at least one combustion chamber (12), wherein the combustion chamber (12) is delimited by a movable piston (70) and has an inlet (16) which is connected to an intake tract (34) of the internal combustion engine (10) and can be closed by an inlet valve (20), and an outlet (18) which is connected to an exhaust system (40) and can be closed by an outlet valve (22), wherein a fuel injector (30) for injecting a fuel is arranged on the combustion chamber (12) and/or on the intake tract (34), and having a spark plug (14) which is designed to ignite a combustible fuel-air mixture in the combustion chamber (12), and having a valve lift curve switching mechanism (38) which allows the opening times of the outlet valve (22) to be shifted and/or changed and allows the opening times of the inlet valve (20) to be shifted and/or changed, the method comprising the following steps:
- opening the inlet valve (20), wherein fresh air flows into the combustion chamber (12) in order to produce a combustible fuel-air mixture,
- closing the inlet valve (20), wherein a combustible fuel-air mixture is produced in the combustion chamber (12),
- igniting the combustible fuel-air mixture in a firing stroke of the combustion chamber (12), causing the piston (70) to move from a top dead center in the direction of a bottom dead center,
- opening the outlet valve (22), wherein the exhaust gases produced during combustion flow at least partially into the exhaust system (40),
- closing the outlet valve (22) and reopening the inlet valve (20) when the piston (70) is in a downward movement after the ignition of the combustible fuel-air mixture, causing additional fresh air to be drawn into the combustion chamber (12), and
- closing the inlet valve (20) and reopening the outlet valve (22), wherein the fresh air drawn into the combustion chamber (12) when the inlet valve (20) is reopened is introduced into the exhaust system (40) as secondary air,
**characterized in that**
during or after reopening of the inlet valve (20), additional fuel is introduced into the combustion chamber (12), which fuel, together with the secondary air, undergoes an exothermic reaction in the exhaust system (40) after the inlet valve (20) has been closed and the outlet valve (22) has been reopened.

2. Method according to claim 1, wherein the combustible fuel-air mixture is ignited in a range from 20° KW before TDC to 10° KW after TDC.

3. Method according to either of claims 1 to 2, wherein the outlet valve is opened (22) in a range from 30° KW after TDC to 50° KW after TDC.

4. Method according to any of claims 1 to 3, wherein the outlet valve (22) is closed in a range from 80° KW after TDC to 100° KW after TDC, and the inlet valve (20) is reopened in a range from 90° KW after TDC to 110° KW after TDC.

5. Method according to any of claims 1 to 4, wherein the outlet valve (22) is reopened in a range from 180° KW after TDC and 220° KW after TDC.

6. Method according to any of claims 1 to 5, wherein the internal combustion engine (10) is designed as a direct injection internal combustion engine (10) and a first quantity of fuel is injected into the combustion chamber (12) after the inlet valve (20) has been closed, and a second quantity of fuel is injected into the combustion chamber after the inlet valve (20) has been reopened.

7. Internal combustion engine (10) comprising:
- at least one combustion chamber (12), wherein the combustion chamber (12) is delimited by a movable piston (70) and has an inlet (16) which is connected to an intake tract (34) of the internal combustion engine (10) and can be closed by an inlet valve (20), and an outlet (18) which is connected to the exhaust system (40) and can be closed by an outlet valve (22), and a fuel injector (30) for injecting a fuel into the combustion chamber (12) is arranged on the combustion chamber (12) and/or on the intake tract (34),
- a spark plug (14) which is designed to ignite a combustible fuel-air mixture in the combustion chamber (12), and
- a valve lift curve switching mechanism (38) which allows the opening times of the outlet valve (22) and the inlet valve (20) to be shifted and/or changed,
- an exhaust gas post-treatment component (48) arranged in the exhaust system (40), and
- a control unit (80) which is designed to carry out a method according to any of claims 1 to 6 when a machine-readable program code (86) stored in a memory unit (82) of the control unit (80) is executed by a computing unit (84) of the control unit (80).

8. Internal combustion engine (10) according to claim 7, wherein the valve lift switching mechanism (38) has switchable cams (28, 29) by means of which the opening times of the outlet valve (22) and the inlet valve (20), in a first switching state of the valve lift curve switching mechanism (38), enable early opening and closing of the outlet valve (22) in order to heat the exhaust gas post-treatment component (48) and, in a second switching state, enable late opening of the outlet valve (22) with the aim of efficiency-optimized combustion in the combustion chamber (12).

9. Internal combustion engine (10) according to claim 7 or 8, wherein the exhaust gas post-treatment component (48) is a three-way catalytic converter (50) or a four-way catalytic converter.

## Revendications

1. Procédé de chauffage d'un composant de post-traitement des gaz d'échappement (48) dans une installation de gaz d'échappement (40) d'un moteur à combustion interne (10) comportant au moins une chambre de combustion (12), dans lequel la chambre de combustion (12) est délimitée par un piston coulissant (70) et présente une ouverture d'admission (16), qui est reliée à un conduit d'aspiration (34) du moteur à combustion interne (10) et qui peut être fermée par une soupape d'admission (20), et une ouverture de refoulement (18) qui est reliée à une installation de gaz d'échappement (40) et qui peut être fermée par une soupape de refoulement (22), dans lequel un injecteur de carburant (30) est agencé sur la chambre de combustion (12) et/ou sur le conduit d'aspiration (34) pour l'injection d'un carburant, ainsi que comportant une bougie d'allumage (14) qui est conçue pour enflammer un mélange carburant-air combustible dans la chambre de combustion (12), ainsi que comportant un mécanisme de commutation de courbe de levée de soupape (38) qui permet un décalage et/ou une modification des temps d'ouverture de la soupape de refoulement (22) et un décalage et/ou une modification des temps d'ouverture de la soupape d'admission (20), comprenant les étapes suivantes :
- ouverture de la soupape d'admission (20), dans lequel de l'air frais s'écoule dans la chambre de combustion (12) pour la production d'un mélange carburant-air inflammable,
- fermeture de la soupape d'admission (20), dans lequel un mélange carburant-air inflammable est produit dans la chambre de combustion (12),
- allumage du mélange air-carburant inflammable dans un cycle de travail de la chambre de combustion (12), moyennant quoi le piston (70) se déplace d'un point mort haut en direction d'un point mort bas,
- ouverture de la soupape de refoulement (22), dans lequel les gaz d'échappement découlant de la combustion s'écoulent au moins partiellement dans l'installation de gaz d'échappement (40),
- fermeture de la soupape de refoulement (22) et réouverture de la soupape d'admission (20) lorsque le piston (70) se trouve dans un mouvement descendant après l'allumage du mélange carburant/air inflammable, moyennant quoi de l'air frais supplémentaire est aspiré dans la chambre de combustion (12), et
- fermeture de la soupape d'admission (20) et nouvelle ouverture de la soupape de refoulement (22), dans lequel l'air frais aspiré dans la chambre de combustion (12) lors de la réouverture de la soupape d'admission (20) est introduit dans l'installation de gaz d'échappement (40) en tant qu'air secondaire,
**caractérisé en ce que**
pendant ou après la réouverture de la soupape d'admission (20), du carburant supplémentaire est introduit dans la chambre de combustion (12), lequel est transformé de manière exothermique dans l'installation de gaz d'échappement (40) conjointement avec l'air secondaire après la fermeture de la soupape d'admission (20) et la réouverture de la soupape de refoulement (22).

2. Procédé selon la revendication 1, dans lequel un allumage du mélange carburant-air inflammable a lieu dans une plage de 20°KW avant ZOT à 10°KW après ZOT.

3. Procédé selon l'une des revendications 1 à 2, dans lequel l'ouverture de la soupape de refoulement (22) a lieu dans une plage de 30°KW après ZOT à 50°KW après ZOT.

4. Procédé selon l'une des revendications 1 à 3, dans lequel la fermeture de la soupape de refoulement (22) a lieu dans une plage de 80°KW après ZOT à 100°KW après ZOT et la réouverture de la soupape d'admission (20) a lieu dans une plage de 90°KW après ZOT à 110°KW après ZOT.

5. Procédé selon l'une des revendications 1 à 4, dans lequel la réouverture de la soupape de refoulement (22) a lieu dans une plage de 180°KW après ZOT et 220°KW après ZOT.

6. Procédé selon l'une des revendications 1 à 5, dans lequel le moteur à combustion interne (10) est un moteur à combustion interne à injection directe (10) et une première quantité de carburant est injectée dans la chambre de combustion (12) après la fermeture de la soupape d'admission (20) et une seconde quantité de carburant est injectée après la réouverture de la soupape d'admission (20).

7. Moteur à combustion interne (10) comportant :
- au moins une chambre de combustion (12), dans lequel la chambre de combustion (12) est délimitée par un piston coulissant (70) et présente une ouverture d'admission (16) qui est reliée à un conduit d'aspiration (34) du moteur à combustion interne (10) et qui peut être fermée par une soupape d'admission (20), et présente une ouverture de refoulement (18) qui est reliée à une installation de gaz d'échappement (40) et peut être fermée par une soupape de refoulement (22), et un injecteur de carburant (30) est agencé sur la chambre de combustion (12) et/ou sur le conduit d'aspiration (34) pour injecter un carburant dans la chambre de combustion (12),
- une bougie d'allumage (14), qui est conçue pour enflammer un mélange carburant-air combustible dans la chambre de combustion (12), ainsi que
- un mécanisme de commutation de courbe de levée de soupape (38) qui permet un décalage et/ou une modification des temps d'ouverture de la soupape de refoulement (22) et de la soupape d'admission (20),
- un composant de post-traitement de gaz d'échappement (48) agencé dans l'installation de gaz d'échappement (40) ; et
- un appareil de commande (80) qui est conçu pour exécuter un procédé selon l'une des revendications 1 à 6, lorsqu'un code de programme (86) lisible par machine et enregistré dans une unité de mémoire (82) de l'appareil de commande (80) est exécuté par une unité de calcul (84) de l'appareil de commande (80).

8. Moteur à combustion interne (10) selon la revendication 7, dans lequel le mécanisme de commutation de courbe de levée de soupape (38) présente des cames commutables (28, 29), avec lesquelles les temps d'ouverture de la soupape de refoulement (22) et de la soupape d'admission (20) permettent, dans un premier état de commutation du mécanisme de commutation de courbe de levée de soupape (38), une ouverture et une fermeture précoces de la soupape de refoulement (22) pour chauffer le composant de post-traitement des gaz d'échappement (48) et, dans un second état de commutation, une ouverture tardive de la soupape de refoulement (22) dans le but d'optimiser le rendement de la combustion dans la chambre de combustion (12).

9. Moteur à combustion interne (10) selon la revendication 7 ou 8, dans lequel le composant de post-traitement de gaz d'échappement (48) est un catalyseur à trois voies (50) ou un catalyseur à quatre voies.
